# EUROPÄISCHE PATENTANMELDUNG

(11) **EP 1 086 617 A1**
(43) Veröffentlichungstag der Anmeldung: **28.03.2001**
(21) Anmeldenummer: 00120088.0
(22) Anmeldetag: 15.09.2000
(51) Int. Cl.: A01C 23/02

(54) **Vorrichtung zum Einbringen von flüssigen Stoffen in das Erdreich**

(30) Priorität: 17.09.1999 DE 19944770
(71) Anmelder: von dem Knesebeck, Tilmann, 21244 Buchholz (DE)
(72) Erfinder: von dem Knesebeck, Tilmann, 21244 Buchholz (DE)
(74) Vertreter: Heldt, Gert, Dr. Dipl.-Ing.

(57) **Zusammenfassung**

Beschrieben wird eine Vorrichtung zum Einbringen von flüssigen Stoffen, vorzugsweise von flüssigem Dünger (Düngerflüssigkeit) oder dergleichen in das Erdreich, mit einem Zufuhrteil (1), das gegenüber einem die Vorrichtung tragenden Fahrzeug ortsfest ist und dem die Düngerflüssigkeit zuführbar ist sowie einem relativ zu dem Zufuhrteil drehbaren Abgabeteil (2), von dem Rohre (4) ausgehen, deren Spitzen (54) aufeinanderfolgend in das Erdreich (15) eintreten und dort Düngerflüssigkeit abgeben. Die Vorrichtung bezweckt, die Eintragleistung zu erhöhen und den Verschleiß zu verringern, wodurch sich die Lebensdauer erhöht. Dies wird dadurch erreicht, daß der Zufuhrbereich des Zufuhrteils außerhalb einer Achse (3) angeordnet ist, um die der Abgabeteil (2) umläuft.

## Beschreibung

Die Erfindung betrifft eine Vorrichtung zum Einbringen von flüssigen Stoffen, vorzugsweise von flüssigem Dünger (Düngerflüssigkeit) oder dergleichen in das Erdreich, mit einem Zufuhrteil, das gegenüber einem die Vorrichtung tragenden Fahrzeug ortsfest ist und dem die Düngerflüssigkeit zuführbar ist, sowie einem relativ zu dem Zufuhrteil drehbaren Abgabeteil, von dem Rohre ausgehen, deren Spitzen aufeinanderfolgend in das Erdreich eintreten und dort Düngerflüssigkeit abgeben.

Bekannte Vorrichtungen zum Einbringen von fließfähigem/flüssigem Dünger in das Erdreich eines Feldes, einer Wiese, einer Plantage oder dergleichen arbeiten mit einer Art "Eintragrädern", die auf horizontalen Achsen drehbar gelagert sind. Die Achsen sind im Rahmen eines Ackerschleppers befestigt, der die Eintragräder über das Feld oder dergleichen bewegt. Von einem mit dem Ackerschlepper gezogenen Tank wird flüssiger Dünger unter Druck über Schlauchleitungen zu den gegenüber dem Rahmen ortsfesten Achsen geleitet, die Bestandteil eines Zufuhrteils sind. Aus einer Bohrung einer Achse des Zufuhrteils tritt Düngerflüssigkeit in Rohre aus, die einerseits an einem um die feststehende Achse umlaufenden/rotierenden Abgabeteil, andererseits an einem ringförmigen Träger befestigt sind, so daß infolge der speichenartig radialen Anordnung der Rohre der Eindruck eines umlaufenden Eintragrades entsteht. Die Umlauf/Drehbewegung des Abgabeteils und der Rohre wird dadurch bewirkt, daß die Spitzen der Rohre, die über den ringförmigen Träger hinausragen, in den Boden eindringen. Die Eindringtiefe wird durch eine Höheneinstellung der Achsen in dem sie tragenden Rahmen eingestellt. Eine lineare Bewegung des Ackerschleppers bewirkt, daß die Achsen ebenfalls linear bewegt werden und damit die Rohre zu einer Umlaufbewegung veranlaßt werden, wobei sie aufeinanderfolgend in das Erdreich eindringen, wo sie die Düngerflüssigkeit freigeben. Nach der Abgabe tritt ein Rohr aus der Erde wieder heraus, während das folgende Rohr eintritt, sein Düngerquantum an die Erde abgibt, wieder aus dem Boden austritt, während das folgende Rohr eintritt usw. Zur Steuerung des richtigen Zeitpunkts der unter erhöhtem Druck erfolgenden Düngerzufuhr zu einem in dem Erdreich befindlichen Rohr werden den Rohren jeweils zugeordnete Bohrungen bei der Drehung des Abgabeteils an der Bohrung des Zufuhrteils vorbeigeführt, so daß jedes Rohr zur richtigen Zeit mit Düngerflüssigkeit versorgt wird. Da die Bohrungen des drehenden/umlaufenden Abgabeteils und des dem gegenüber ortsfesten Zufuhrteils nur sehr kurz fluchten, ist die Verbindung zu dem Düngervorrat entsprechend nur kurz, was die Einbringleistung begrenzt. Außerdem ist der Durchtritt von chemisch-metallurgisch aggressiver Düngerflüssigkeit zu Wälzlagern, mit denen der drehbare/umlaufende Abgabeteil auf der Achse des Zufuhrteils gelagert ist, nicht zu verhindern, was zu starker Korrosion der Lager bis zu deren Festsitzen in relativ kurzer Zeit führt. Die Rohrspitzen der bekannten Einbringvorrichtungen verschleißen sehr schnell. Sind die Rohre der Eintragräder beschädigt, z. B. verbogen, so können sie nicht ausgewechselt werden. Alle diese Nachteile der bekannten Vorrichtungen tragen dazu bei, daß sie nur während einer Saison betrieben werden können, wonach ein umfangreicher und teurer Ersatz von verschlissenen Teilen erforderlich ist. Wegen der relativ geringen Düngerzufuhrleistung ist die Düngeleistung der sehr kostspieligen Vorrichtungen beschränkt. Ein Düngergemisch kann praktisch nicht eingebracht werden, weil die einzelnen Düngerbestandteile in Tanks oft miteinander reagieren. Auch eine weitere Forderung an kostspielige Flüssigkeitszufuhrvorrichtungen ist von den bekannten Systemen nicht zu erfüllen, nämlich die oberirdische Zufuhr von flüssigen Herbiziden und/oder Insektiziden. In den Fällen der Zufuhr mehrerer Düngerarten und/oder der zusätzlichen Insektizid- und/oder Herbizidzufuhr muß bei den bekannten Einbringvorrichtungen für jeden Stoff eine Feldfahrt unternommen werden, was in Verbindung mit der begrenzten Ausbringleistung den ökonomischen Erfolg bekannter Vorrichtungen trotz der grundsätzlichen Vorteile beeinträchtigt.

Die der Erfindung zugrunde liegende Aufgabe besteht in einer Verbesserung der bekannten Einbringsysteme der eingangs genannten Art.

Gemäß der Erfindung wird dies dadurch erreicht, daß der Zufuhrbereich des Zufuhrteils außerhalb einer Achse angeordnet ist, um die der Abgabeteil umläuft.

Eine wichtige Weiterbildung der Erfindung besteht darin, daß der Zufuhrteil mindestens einen Kanal für die zugeführte Düngerflüssigkeit aufweist, mit dem zu den Rohren führende Kanäle des Abgabeteils aufeinanderfolgend in Verbindung kommen. Hierbei kommt gemäß der Erfindung mit dem Kanal des Zufuhrteils jeweils der Kanal desjenigen Rohres in Verbindung, das sich zur Abgabe von Düngerflüssigkeit im Erdreich befindet.

Eine besonders vorteilhafte weitere Ausgestaltung der Erfindung, der selbständiger erfinderischer Rang zukommt, weil er mit einfachen Mitteln die Abgabeleistung für Düngerflüssigkeit erheblich steigert, besteht darin, daß der ortsfeste Kanal des Zufuhrteils in dem dem Abgabeteil und seinen Kanälen benachbarten Bereich in Umlaufrichtung verlängert ist. Es liegt im Rahmen der Erfindung, daß umgekehrt auch die umlaufenden Kanäle des Abgabeteils in ihren dem Zufuhrteil benachbarten Bereichen in Umlaufrichtung erweitert sein können. Ein Optimum wird erreicht, wenn die Länge des ortsfesten in Umlaufrichtung des Abgabeteils sich erstreckenden Kanals etwas kleiner ist als die Abstände der umlaufenden Kanäle voneinandert derart, daß der Überdeckungsgrad von ortsfestem Kanal und den umlaufenden Kanälen jeweils maximiert ist.

Eine vorteilhafte Weiterbildung der Erfindung zur Vermeidung korrodierender Lagerelemente durch die Düngerflüssigkeit besteht darin, die Lagerelemente zum Lagern des umlaufenden Abgabeteils auf der Achse des ortsfesten Zufuhrteils zentrisch und im Abstand von dem Zufuhrbereich anzuordnen. Hierdurch und durch die nachfolgenden Merkmale läßt sich eine weitgehende Abschirmung der Lager gegen aggressive Düngerflüssigkeit erreichen. Hierzu tragen gemäß der Erfindung als Wälzlager ausgebildete Lagerelemente bei, die mit axialen Dichtscheiben versehen und vorzugsweise mit Öl gefüllt sind. Eine weitere Maßnahme zur Trennung der Lagerelemente und der Düngerflüssigkeit besteht darin, zwischen dem Zufuhrbereich und einem Lagerelement mindestens eine Dichtung vorzusehen, deren Umgebung über einen Entlastungskanal mit dem Freien in Verbindung steht.

Eine sehr vorteilhafte Ausgestaltung der Erfindung, der selbständiger erfinderischer Rang zukommt, besteht darin, daß der Zufuhrteil einen weiteren Zufuhrbereich aufweist, der außerhalb der Achse angeordnet ist, um die der Abgabeteil umläuft, und daß die Rohre zeitweise jeweils mit beiden Zufuhrbereichen zwecks Mischung unterschiedlicher Düngerflüssigkeiten in Verbindung stehen. Eine derartige Maßnahme erlaubt das Mischen von in getrennten Tanks mitgeführten unterschiedlichen Düngerflüssigkeiten, deren Vermischung in einem gemeinsamen Tank problematisch oder unmöglich wäre, z. B. wegen unerwünschter chemischer Reaktionen, Ausfall- und Kristallisationserscheinungen und dergleichen. Da die Mischung unterschiedlicher Düngerflüssigkeiten nach diesem Erfindungsmerkmal erst im Abgabeteil erfolgt und die Mischung sofort durch die Rohre abfließt und an ihren Bestimmungsort im Erdreich gelangt, können mit einer Düngerfahrt mehrere Düngerflüssigkeiten gleichzeitig in das Erdreich eingebracht werden.

Der sehr lästige Verschleiß der Rohrspitzen in deren Endenbereichen läßt sich gemäß der Erfindung stark verringern, wenn die Spitzen aus Hartmetall bestehen. Vorteilhaft lassen sich derartige Rohrspitzen lösbar an den Rohren befestigen, etwa durch Schraubverbindungen, wodurch sie leicht austauschbar sind. Zur Vermeidung weiterer Ausflüsse von Düngerflüssigkeit aus den Rohren infolge der Zentrifugalkräfte bei höheren Geschwindigkeiten lassen sich in den Endenbereichen der Rohre Rückschlagventile anordnen.

In vorteilhafter Weiterbildung der Erfindung sind die Rohre lösbar an dem Abgabeteil befestigt, vorzugsweise abschraubbar. Außerdem können die Rohre in einem Endenbereich von einer ringförmigen Halterung gehalten sein, an der sie lösbar befestigt, vorzugsweise verschraubt sind. Die Rohre können dann bei Beschädigungen, etwa bei Verbiegungen, leicht ausgetauscht werden, indem sie einfach abgeschraubt werden.

Eine Nutzung der Vorrichtung der Erfindung zum Zuführen weiterer Flüssigkeiten, z. B. von Insektiziden und/oder Herbiziden, ist außerordentlich vorteilhaft, weil dann ein gesondertes Besprühen mit eigenen Maschinen und dem entsprechenden Personal entfallen kann, und gleichzeitiges Einbringen von Düngerflüssigkeit in das Erdreich und das Aufbringen der weiteren Flüssigkeiten auf das Erdreich oder darauf wachsende Pflanzen möglich ist. Die Lösung dieses Problems, die selbständigen erfinderischen Rang aufweist, kann gemäß einer vorteilhaften Weiterbildung der Erfindung darin bestehen, daß der Zufuhrteil zusätzlich zu dem Zufuhrbereich für Düngerflüssigkeit einen weiteren Zufuhrbereich für weitere Flüssigkeiten, insbesondere Herbizide und/oder Insektizide aufweist. Hierbei können Kanäle im Zufuhrteil für Düngerflüssigkeit und für eine weitere Flüssigkeit mit jeweils getrennten Kanälen im Abgabeteil in Verbindung stehen derart, daß Rohre stets nur Düngerflüssigkeit, weitere Rohre stets nur weitere Flüssigkeiten leiten. Die Rohre für die weiteren Flüssigkeiten enden vorteilhaft über dem Erdreich, wenn die Flüssigkeiten wie Insektizide und/oder Herbizide auf die Erde und/oder darauf wachsende Pflanzen aufgebracht werden sollen. Dem Zufuhrteil und den Rohren werden die Flüssigkeiten unter Druck zugeleitet. Der Zufuhrteil und/ oder der Abgabeteil kann in weiterer Ausgestaltung der Erfindung rotationssymmetrisch ausgebildet sein.

Mit der Einbringungsvorrichtung gemäß der Erfindung können beliebige Flüssigkeiten, vorzugsweise Düngerflüssigkeiten aber auch flüssige Schädlings- und/oder Unkrautbekämpfungsmittel in das Erdreich eingebracht werden, sofern sie ausreichend fließfähig sind. Zwecks Vermeidung von Korrosionsschäden bestehen die mit der Flüssigkeit in Berührung kommenden Teile vorteilhaft aus korrosionsbeständigem Stahl (Edelstahl) oder Aluminium.

Eine besonders vorteilhafte Aufhängung eines "Eintragrades" mit Zufuhr- und Abgabeteil kann in weiterer Ausgestaltung der Erfindung, der eigenständiger erfinderischer Rang zukommt, dadurch erfolgen, daß Zufuhrteil und Abgabeteil mittels mindestens einer Feder, vorzugsweise mittels Schenkelfedern an einem Träger befestigt sind. Besonders vorteilhaft werden dabei die Schenkelfedern, z. B. zwei Schenkelfedern mit jeweils zwei Windungen, nebeneinander angeordnet. Verlaufen dabei die Windungsrichtungen der beiden Federn gegenläufig, so sind Bewegungen senkrecht zu den eigentlichen Federbewegungen in gewissem Umfang möglich. Dies ist vorteilhaft, weil so beim Auftreffen der Rohre auf ein Hindernis Ausweichbewegungen möglich sind. Bei der Befestigung der Schenkelfedern können deren kurze Schenkel mit dem Träger oder Rahmen verbunden sein. Die langen Schenkel können vorteilhaft das Ende einer oder mehrerer Schwingen tragen, deren anderes Ende den Zufuhr- und Abgabeteil trägt.

Mit der Erfindung sind zahlreiche Vorteile verbunden:

Die außermittige Zufuhr der Düngerflüssigkeit und/oder weiterer Flüssigkeiten läßt eine gute Abdichtung, insbesondere der Lager, zu.

Infolge der Verlängerung des wirksamen Abgabebereichs des Kanals im Zufuhrteil können den Kanälen des Abgabeteils und damit den Rohren maximale Flüssigkeitsmengen zugeführt werden.

Mit der Anordnung eines weiteren Zufuhrbereichs im Zufuhrteil können im Abgabeteil auch solche unterschiedlichen Düngerflüssigkeiten gemischt werden, die sich in Tanks nicht gemeinsam transportieren lassen.

Schließlich ist es möglich, unterirdisch Düngerflüssigkeit einzubringen und gleichzeitig oberirdisch Herbizid- und/oder Insektizidflüssigkeit zuzuführen.

Die Erfindung wird anhand eines Ausführungsbeispiels näher erläutert. Es zeigen
- Figur 1:: einen Zufuhr- und Abgabeteil im Schnitt, Figur 2 eine Seitenansicht entsprechend Pfeil A in Figur 1 mit einer gefederten Aufhängung in verkleinertem Maßstab,
- Figur 2a:: eine Ansicht entsprechend Pfeil A' in Fig. 2 in vergrößertem Maßstab,
- Figur 3:: einen Gleitklotz mit erweitertem Zufuhrkanal für Düngerflüssigkeit im Zufuhrteil in einer Vorderansicht in vergrößertem Maßstab,
- Figur 4:: einen Schnitt nach Linie B-B in Figur 3,
- Figur 5:: einen Schnitt nach Linie C-C in Figur 3,
- Figur 6:: einen Zufuhr- und Abgabeteil mit zwei Zufuhrbereichen für unterschiedliche Düngerflüssigkeiten.

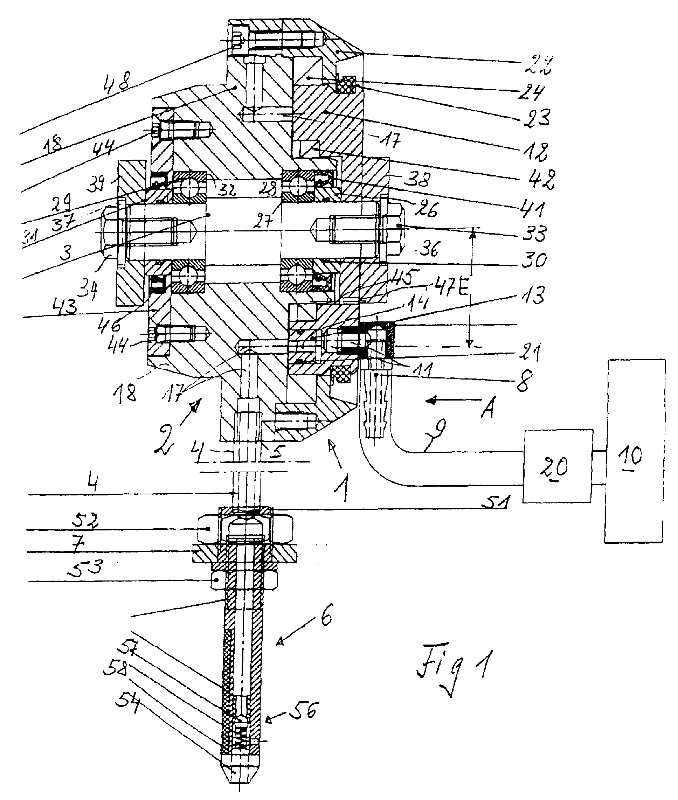

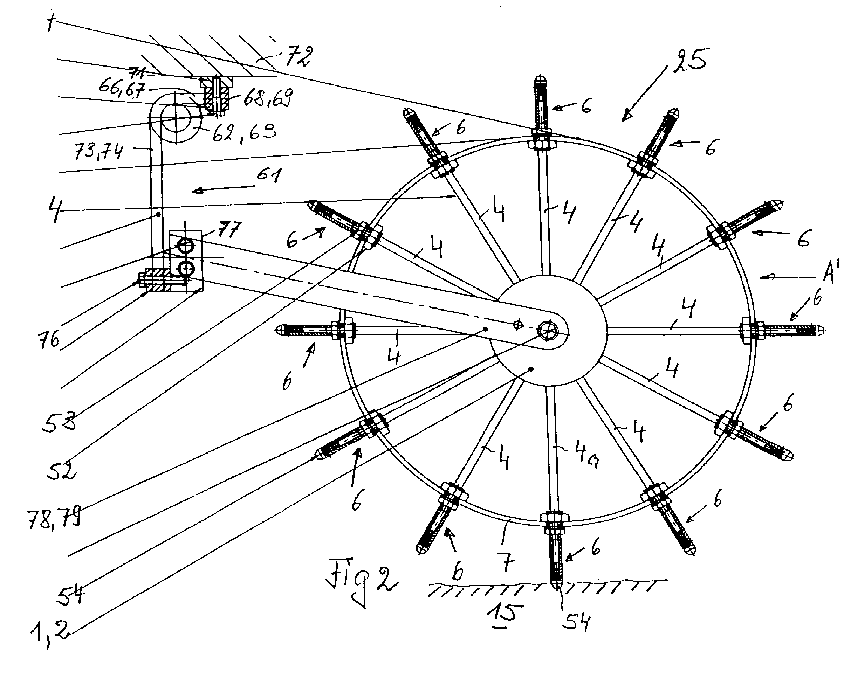

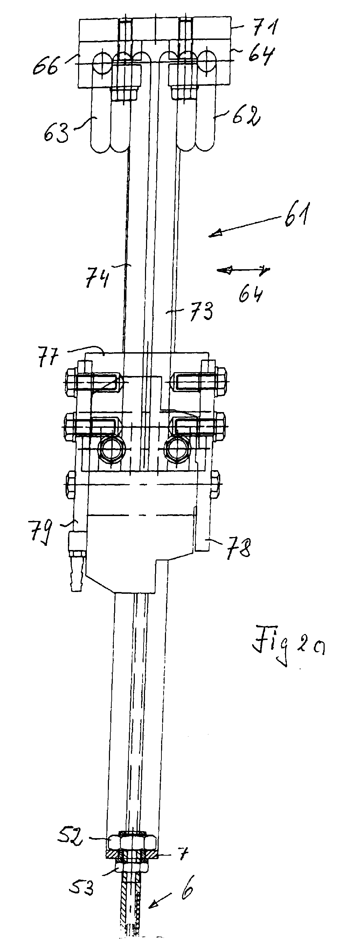

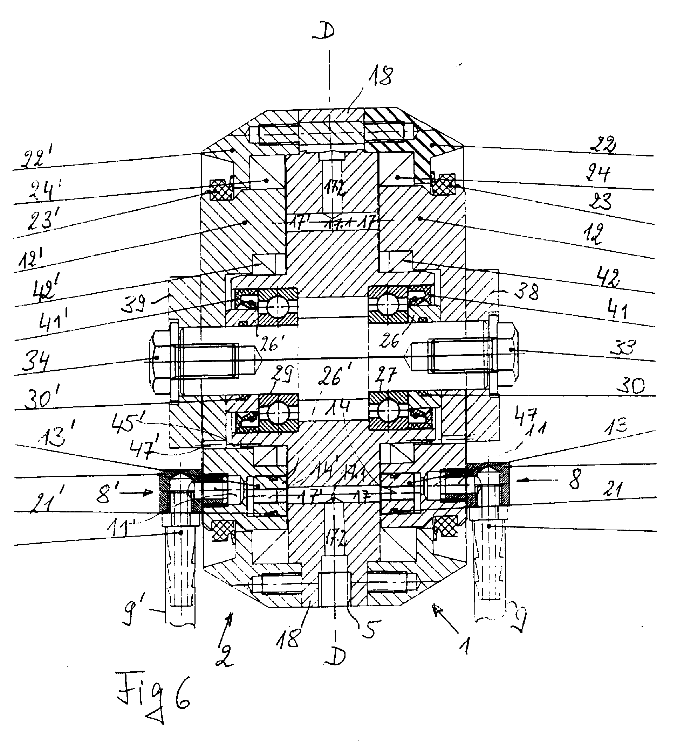

Die Figuren 1 bis 5 zeigen einen Zufuhr- und Abgabeteil 1 bzw. 2 in Schnitten bzw. in einer Seitenansicht. Der Zufuhrteil 1 weist eine relativ zu einem nicht dargestellten Ackerschlepper mit Tank für die Düngerflüssigkeit feststehende im Düngebetrieb horizontal angeordnete Achse 3 auf, die in einem von dem Schlepper bewegten Rahmen 78 befestigt ist. Dieser Rahmen wird von dem Ackerschlepper über ein leeres oder mit Pflanzen bewachsenes Feld, eine Wiese, eine Plantage oder dergleichen Fläche hinwegbewegt, wobei an dem Abgabeteil 2 speichenartig und radial verlaufende Rohre 4 befestigt sind, durch deren Endenbereiche 6 Düngerflüssigkeit in das Erdreich eingebracht wird. Figur 1 zeigt lediglich ein Rohr 4, doch sind - wie Figur 2 erkennen läßt - über den Umfang des Abgabeteils 2 eine Reihe von Rohren verteilt, deren Endenbereiche mit Spitzen aufeinanderfolgend in das Erdreich 15 eindringen, dort über eine gewisse Zeit Düngerflüssigkeit abgeben und wieder aus dem Erdreich austauchen. Während der Endenbereich eines Rohres das Erdreich verläßt oder danach dringt das jeweils folgende Rohr in das Erdreich ein, gibt Düngerflüssigkeit ab, taucht wieder aus dem Erdreich aus usw. Die Enden der Rohre 4 sind in kreisringförmigen Halterungen 7 befestigt. An ihnen sind die Endenbereiche 6 angeschraubt. Bei der horizontalen Bewegung der in ihrer Höhenlage über dem Boden einstellbaren Achse 3 und dem Eindringen der Rohre 4, genauer deren Endenbereiche 6, in das Erdreich, wird der Abgabeteil 2 in eine umlaufende drehende Rotationsbewegung versetzt.

Im Prinzip sind derartige Einbringvorrichtungen mit den dargestellten Eintragrädern bekannt und werden in der Praxis auch eingesetzt. Die nachfolgend beschriebene Erfindung betrifft einzeln und/oder in Kombination die besondere Ausbildung von Zufuhr- und Abgabeteil 1 bzw. 2, die Anbringung der Rohre 4 an dem Abgabeteil 2 und der ringförmigen Halterung 7, sowie die Anbringung und Ausbildung der Endenbereiche 6.

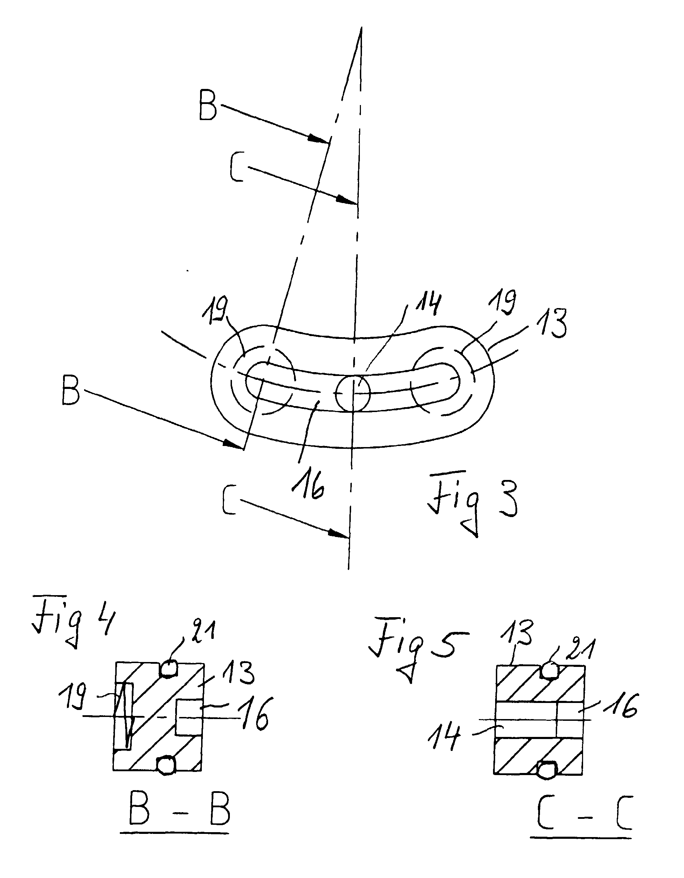

Die relativ zu dem nicht dargestellten Rahmen ortsfeste z. B. aus Edelstahl bestehende horizontale Achse 3 des Zufuhrteils 1 ist nicht wie beim Stand der Technik zum Zuführen von Düngerflüssigkeit ausgebildet. Der ebenfalls ortsfeste Zufuhrbereich 8 des Zufuhrteils 1 ist vielmehr außermittig, also in einer Entfernung E zu der Achse 3 angeordnet. Ein Schlauch 9 zum Zuführen der Düngerflüssigkeit aus einem Tank 10 ist an einem mit einem Kanal in Form einer Bohrung 11 versehenen Flansch 12 aus Edelstahl oder Aluminium angeschraubt. Die Bohrung 11 steht in Verbindung mit einem in dem Flansch 12 befindlichen Gleitblock 13, von dem die Figuren 3 bis 5 Einzelheiten zeigen. Aus Figur 3 geht hervor, daß eine als weiterer Kanal ausgebildete Bohrung 14 in eine langgestreckte Kammer 16 in dem Gleitblock 13 mündet. Die Erstreckung der Kammer 16 ist etwas geringer als die Abstände zweier benachbarter Kanäle in dem drehbaren/umlaufenden Abgabeteil 2, die ebenfalls als Bohrungen 17 ausgebildet sind. Infolge der Verbreiterung der Bohrung 14 in Umlaufrichtung durch die Kammer 16 steht einer Bohrung 17 des Abgabeteils eine weitgrößere Zeitspanne zum Zuleiten von Düngerflüssigkeit in ein Rohr 4 zur Verfügung, als wenn eine kreisrunde normale Bohrung 14 des Zufuhrteils 1 mit einer daran vorbeilaufenden Bohrung 17 des Abgabeteils 2 in Überdeckung käme. Prinzipiell können in kinematischer Umkehrung aber auch die Abstände zwischen den Bohrungen 17 zur Ausbildung von Verbreiterungskammern dienen, die die Überdeckungszeit vergrößern, doch erfordert eine solche Lösung einen höheren Aufwand als die einmalige Verbreiterung der ortsfesten Kammer 16 im feststehenden Zufuhrteil 1. An der Kammer 16 laufen die im drehenden Abgabeteil 2 befindlichen Bohrungen 17 vorbei, wobei ihnen und denjenigen mit ihnen in Verbindung stehenden Rohren 4 Düngerflüssigkeit zugeleitet wird, die in das Erdreich eingedrungen sind. Der Gleitblock 13 besteht vorteilhaft aus sogenanntem POM-Material, das mit einem bewegten an ihm entlang schleifenden oder gleitenden Körper 18 des Abgabeteils 2, der aus Metall, vorteilhaft aus Edelstahl oder Aluminium (gehärtet) bestehen kann, eine günstige Gleitpaarung ergibt. Der Gleitblock 13 wird durch zwei Federn 19 (Fig. 3 und 4) gegen Körper 18 des Abgabeteils 2 gedrückt. Ein Dichtring in Form eines sogenannten O-Rings 21 sorgt für eine Abdichtung der Kammer 16 gegen Austritt von Düngerflüssigkeit. An den feststehenden Flansch 12 schließt sich axial ein mitumlaufendes/mitdrehendes Drehteil 22 des Abgabeteils 2 vorzugsweise aus Aluminium oder Edelstahl an. Mit 23 ist ein feststehender Abstreifring, mit 24 ein Dichtring bezeichnet. Beide Dichtungselemente bewirken eine Abdichtung zwischen dem ortsfesten Flansch 12 und dem drehenden/ umlaufenden Drehteil 22. An das Drehteil 22 schließt sich axial ein ortsfester Distanzring 26 aus gehärtetem Edelstahl an, der ein zwischen feststehender Achse 3 und umlaufenden Körper 18 sitzendes Wälzlager in Form eines Kugellagers 27 gegen eine Schulter 28 des Körpers 18 drückt. Mit 30 ist ein O-Ring zur Abdichtung bezeichnet. Axial versetzt befindet sich ein zweites Wälzlager in Form eines Kugellagers 29, das von einem weiteren Distanzring 31 gegen eine Schulter 32 des Körpers 18 gedrückt wird. Zum Aufbringen eines Zusammenpreßdrucks dienen sogenannte Inbusschrauben 33, 34, die über Unterlegscheiben 36 bzw. 37 und Druckringe 38 bzw. 39 den erforderlichen Zusammenpreßdruck aufbringen. Als Kugellager 27 und 29 werden vorteilhaft gedichtete Lager vorgesehen, die mit nicht dargestellten Dichtscheiben axial abgedichtet und vorteilhaft mit Öl gefüllt sind.

Zwischen dem Körper 18 des Abgabeteils 2 und dem Distanzring 26 ist ein Dichtring 41, zwischen dem Körper 18 und dem Flansch 12 ein weiterer Dichtring 42 angeordnet. Außerdem befindet sich zwischen dem Distanzring 31 und einem Deckel 43, der mittels Schrauben 44 an dem Körper 18 angeschraubt ist, ein Dichtring 46. Zur unschädlichen Ableitung von Düngerflüssigkeit, die an den Dichtringen 41 und 42 vorbeigelangen und das Kugellager 27 erreichen könnte, wo sie unter Umständen Korrosionsschäden anrichten würde, ist im Umgebungsbereich 45 der Dichtringe 41 und 42 ein Entlastungskanal 47 ins Freie vorgesehen. Zur Verbindung von Drehteil 22 und Körper 18 dienen Inbusschrauben 40,

Ein Rohr 4, das in Figur 1 aus Platzgründen unterbrochen dargestellt ist, ist einerseits an dem Abgabeteil 2 mittels einer Schraubverbindung 5 befestigt. Andererseits ist es an einer Aufnahme 51 angeschweißt. Die Aufnahme 51 ist mittels einer Schraube 52 mit der ringförmigen Halterung 7 verbunden, in die ein Endenbereich 6 eines Rohres 4 eingeschraubt und mit einer Schraube 53 gesichert ist. Der Endenbereich ist mit einer angelöteten Spitze 54 versehen. Besteht diese aus Hartmetall, so ist eine Beschädigung auch dann weitgehend ausgeschlossen, wenn die Spitze auf einen Stein oder dergleichen auftrifft. Verbiegt sich dennoch ein Rohr 3 während des Betriebes, so kann es von dem Abgabeteil 2 und von der ringförmigen Halterung 7 abgeschraubt werden. Wird ein Endenbereich 6 beschädigt, so wird er aus der Aufnahme 51 herausgeschraubt.

In dem Endenbereich 6 eines Rohres 3 befindet sich vorteilhaft ein Rückschlagventil 56, das ein Austreten von Düngerflüssigkeit aus dem Rohr 4 und den vorgeordneten Kanälen infolge der bei höheren Schleppergeschwindigkeiten merkbaren Zentrifugalkräfte verhindert. Der bei der gewollten Zufuhr von Düngerflüssigkeit auf diese aufgebrachte Druck öffnet den Kugelverschluß 57 des Rückschlagventils entgegen der Wirkung der Feder 58, so daß die Düngerflüssigkeit in das Erdreich austreten kann.

In den Figuren 2 und 2a sind schematisch der Zufuhrteil 1 und der Abgabeteil 2 mit von letzterem radial und speichenartig ausgehenden Rohren 4 dargestellt. Ein Rohr 4a befindet sich im Erdreich 15. Die Figuren zeigen außerdem eine im Vergleich zu dem Stand der Technik besonders vorteilhafte federnde Aufhängung 61 eines derartigen "Eintragrades" 25.

Die Aufhängung 61 weist zwei Schenkelfedern 62, 63 mit jeweils zwei Windungen auf, die bei den einzelnen Federn in unterschiedlichen Richtungen verlaufen. Hierdurch ist eine gewisse gewünschte Beweglichkeit der Federn in Richtung des Doppelpfeils 64 (Figur 2a) gegeben, damit die Spitzen 54 Hindernissen auch seitlich ausweichen können. Die kurzen Schenkel 66, 67 der Federn 62 bzw. 63 sind einerseits in Federklemmen 68 bzw. 69 eingeklemmt, die ihrerseits über eine Montageplatte 71 mit dem Rahmen oder Träger 72 verbunden sind, der an dem nicht dargestellten Ackerschlepper befestigt ist. Die langen Schenkel 73, 74 sind in einer Federklemme 76 eingeklemmt, die mit einem Anschlußflansch 77 verbunden ist. An diesem sind Schwingen 78, 79 befestigt, die das Eintragrad 25 mit Zufuhrteil 1, Abgabeteil 2 und Rohren 4 tragen. Die dargestellte federnde Aufhängung 61 eines Eintragrades 25 ist einfach und daher wenig aufwendig und außerdem robust und daher betriebssicher, da teure und empfindliche Federelemente und Ausgleichsmittel des Standes der Technik entfallen können.

Arbeitsweise der Vorrichtung gemäß den Figuren 1 bis 5:
Die durch den Schlauch 9 aus dem Tank 10 des nicht dargestellten Ackerschleppers unter Druck über eine Dosieranordnung 20 dem Zufuhrbereich 8 des Zufuhrteils 1 zugeführte Düngerflüssigkeit gelangt durch Bohrung 11 in den Gleitblock 13 und die erweiterte Kammer 16. Der Abgabeteil 2 wird durch das aufeinanderfolgende Eindringen der Rohre 4, d. h. deren Endenbereiche 6 in das Erdreich und durch deren Austauchen aus dem Erdreich in Drehung/Rotation versetzt. Infolge dessen laufen der Drehteil 22 und der Körper 18 um die feststehende Achse um. Damit laufen auch die Bohrungen 17 in dem Körper 18 aufeinanderfolgend an der feststehenden Kammer 16 des Zufuhrteils 1 vorbei und werden daher mit Düngerflüssigkeit versorgt, die sie zu den angeschlossenen im Erdreich 15 befindlichen Rohren 4 leiten. Durch deren Endenbereiche 6 fließt die Düngerflüssigkeit dann in das Erdreich. Infolge der Erweiterung der Kammer 16 kann die Zufuhrleistung maximiert werden. Außerdem ist infolge der außermittigen Zuführung und die dadurch mögliche Hintereinanderschaltung von Dichtungselementen praktisch ausgeschlossen, daß aggressive Düngerflüssigkeit zu den Lagern 27, 29 gelangt, die zur Sicherheit ihrerseits noch mit eingebauten Dichtungen versehen sind. An den Dichtringen vorbeigeflossene Düngerflüssigkeit kann durch den Entlastungskanal 47 ins Freie abfließen.

Trifft eine äußerst verschleißarme Spitze 54 des Endenbereichs 6 eines Rohres 4 auf ein Hindernis, z. B. einen Stein, so kann im Gegensatz zu dem Stand der Technik ein beschädigtes Rohr und/oder ein beschädigter Endenbereich einfach abgeschraubt und ersetzt werden. Die Vorrichtung gemäß der Erfindung erlaubt somit eine erhöhte Düngerflüssigkeitszufuhr bei verminderter Störungsanfälligkeit und verminderten Reparaturkosten, was bei kostspieligen Düngefahrzeugen sehr wichtig ist.

Figur 6 zeigt eine Variante der Erfindung, bei der zwei unterschiedliche Düngerflüssigkeiten aus getrennten Tanks getrennt zugeführt werden und erst in einem gemeinsamen Abgabekanal des Abgabeteils miteinander vermischt sowie in das Erdreich eingebracht werden. Mit entsprechenden Bauelementen der Figuren 1 bis 5 übereinstimmende Bauelemente der Figur 6 sind mit gleichen Bezugszeichen, verdoppelte Bauelemente zusätzich mit einem Strich gekennzeichnet. Figur 6 zeigt eine um eine Mittellinie D im wesentlichen spiegelbildlich ausgebildete Ausführungsform für die Einbringvorrichtung gemäß der Variante der Figur 6. Zwei Schläuche 9, 9' fördern aus getrennten Tanks unterschiedliche Düngerflüssigkeiten zu den Zufuhrbereichen 8 bzw. 8'. Von deren Bohrungen 11, 11' werden die Düngerflüssigkeiten zu den Gleitblöcken 13 bzw. 13' und von deren erweiterten Kammern in die vorbeilaufenden Kanäle 17 bzw. 17' des gemeinsamen Abgabeteils 2 geleitet. In den Treffpunkten 17.1 der Kanäle 17, 17' vereinigen sich die Düngerflüssigkeiten und fließen gemeinsam über gemeinsame Kanäle 17.2 in die zugeordneten Rohre. Da die Mischung erst kurz vor dem Verlassen des Abgabeteils 2 erfolgt, sind schädliche Reaktionen der Düngerflüssigkeiten miteinander ausgeschlossen. Durch diese Weiterbildung der Erfindung ist es möglich, mit nur einer Düngerfahrt mehrere unterschiedliche Düngerflüssigkeiten zuzuführen, die in einem gemeinsamen Tank nicht hätten gemischt werden können.

Gemäß einer weiteren in der Zeichnung nicht dargestellten Ausführungsform der Erfindung können Düngerflüssigkeit und flüssige Herbizide und/oder Insektizide gleichzeitig dadurch zugeführt werden, daß einem Zufuhrbereich, etwa 8' zugeordnete Kanäle, etwa die Kanäle 17', nicht mit den Kanälen 17 für die Düngerflüssigkeit in Verbindung stehen, sondern getrennt zu weiteren Rohren geführt werden. Aus diesen Rohren, die im allgemeinen über dem Erdboden enden, können zusätzlich und unabhängig von der Zufuhr von Düngerflüssigkeit Insektizide und/ oder Herbizide auf den Boden oder darauf wachsende Pflanzen aufgebracht, z. B. aufgesprüht werden, so daß keine eigenen Fahrten hierzu erfolgen müssen. Die Nutzbarkeit der Vorrichtung gemäß der Erfindung wird hierdurch noch gesteigert.

Bei den zuletzt beschriebenen Varianten der Erfindung können die Rohre, deren Anbringung an den Abgabeteil und an der ringförmigen Halterung sowie die Endenbereiche vorteilhaft ausgebildet sein, wie anhand der Figuren 1 bis 5 beschrieben.

## Patentansprüche

1. Vorrichtung zum Einbringen von flüssigen Stoffen, vorzugsweise von flüssigem Dünger (Düngerflüssigkeit) oder dergleichen in das Erdreich, mit einem Zufuhrteil, das gegenüber einem die Vorrichtung tragenden Fahrzeug ortsfest ist, und dem die Düngerflüssigkeit zuführbar ist, sowie einem relativ zu dem Zufuhrteil drehbaren Abgabeteil, von dem Rohre ausgehen, deren Spitzen aufeinanderfolgend in das Erdreich eintreten und dort Düngerflüssigkeit abgeben, dadurch gekennzeichnet, daß der Zufuhrbereich (8, 8') des Zufuhrteils (1, 1') außerhalb einer Achse (3) angeordnet ist, um die der Abgabeteil (2) umläuft.

2. Vorrichtung nach Anspruch 1, dadurch gekennzeichnet, daß das Zufuhrteil (1, 1') mindestens einen Kanal (11, 11') für die zugeführte Düngerflüssigkeit aufweist, mit dem zu den Rohren (4) führende Kanäle (17, 17') des Abgabeteils (2) aufeinanderfolgend in Verbindung kommen.

3. Vorrichtung nach Anspruch 2, dadurch gekennzeichnet, daß mit dem Kanal (11, 11') des Zufuhrteils (1, 1') der Kanal (17, 17') desjenigen Rohres (4) in Verbindung kommt, das sich zur Abgabe von Düngerflüssigkeit im Erdreich (15) befindet.

4. Vorrichtung nach Anspruch 2 und/oder 3, dadurch gekennzeichnet, daß der ortsfeste Kanal (11, 11') des Zufuhrteils (1, 1') in dem dem Abgabeteil (2) und seinen umlaufenden Kanälen (17, 17') benachbarten Bereich in Umlaufrichtung verlängert ist.

5. Vorrichtung nach Anspruch 4, dadurch gekennzeichnet, daß die Länge des ortsfesten in Umlaufrichtung des Abgabeteils sich erstreckenden Kanals (16) etwas kleiner ist als die Abstände der umlaufenden Kanäle (17, 17') voneinander derart, daß der Überdeckungsgrad von ortsfestem Kanal (16) und den umlaufenden Kanälen (17, 17') jeweils maximiert ist.

6. Vorrichtung nach einem oder mehreren der vorhergehenden Ansprüche, dadurch gekennzeichnet, daß Lagerelemente (25, 29) zum Lagern des umlaufenden Abgabeteils (2) auf der Achse (3) des ortsfesten Zufuhrteils (1, 1') zentrisch und im Abstand (E) von dem Zufuhrbereich (8, 8') angeordnet sind.

7. Vorrichtung nach Anspruch 6, dadurch gekennzeichnet, daß die Lagerelemente als Wälzlager (27, 29) mit axialen Dichtscheiben ausgebildet sind.

8. Vorrichtung nach Anspruch 6 und/oder 7, dadurch gekennzeichnet, daß zwischen dem Zufuhrbereich (8, 8') und einem Lagerelement (25) mindestens eine Dichtung (41, 42; 41', 42') vorgesehen ist, deren Umgebung (45, 45') über einen Entlastungskanal (47, 47') mit dem Freien in Verbindung steht.

9. Vorrichtung nach einem oder mehreren der vorhergehenden Ansprüche, dadurch gekennzeichnet, daß der Zufuhrteil (1') einen weiteren Zufuhrbereich (8') aufweist, der außerhalb der Achse (3) angeordnet ist, um die der Abgabeteil (2) umläuft, und daß die Rohre (4) zeitweise jeweils mit beiden Zufuhrbereichen (8, 8') zwecks Mischung unterschiedlicher Düngerflüssigkeiten in Verbindung stehen.

10. Vorrichtung nach einem oder mehreren der vorhergehenden Ansprüche, dadurch gekennzeichnet, daß die Spitzen (54) der Rohre (4) aus Hartmetall bestehen.

11. Vorrichtung nach Anspruch 10, dadurch gekennzeichnet, daß im Endenbereich (6) der Rohre (4) Rückschlagventile (56) vorgesehen sind.

12. Vorrichtung nach einem oder mehreren der vorhergehenden Ansprüche, dadurch gekennzeichnet, daß die Rohre (4) lösbar an dem Abgabeteil (2) befestigt, vorzugsweise abschraubbar sind, und sich von diesem nach außen erstrecken.

13. Vorrichtung nach Anspruch 12, dadurch gekennzeichnet, daß die Rohre (4) in ihren Endenbereichen (6) von einer ringförmigen Halterung (7) gehalten sind, an der sie lösbar befestigt sind.

14. Vorrichtung nach einem oder mehreren der vorhergehenden Ansprüche, dadurch gekennzeichnet, daß der Zufuhrteil außer dem Zufuhrbereich für Düngerflüssigkeit einen weiteren Zufuhrbereich für weitere Flüssigkeiten, insbesondere Herbizide und/oder Insektizide aufweist.

15. Vorrichtung nach Anspruch 14, dadurch gekennzeichnet, daß Kanäle im Zufuhrteil für Düngerflüssigkeit und für eine weitere Flüssigkeit mit jeweils getrennten Kanälen im Abgabeteil in Verbindung stehen derart, daß Rohre stets nur Düngerflüssigkeit, weitere Rohre stets nur weitere Flüssigkeiten leiten.

16. Vorrichtung nach Anspruch 15, dadurch gekennzeichnet, daß Düngerflüssigkeit leitende Rohre sich abwechseln mit Rohren für die Leitung von weiteren Flüssigkeiten.

17. Vorrichtung nach Anspruch 15 und/oder 16, dadurch gekennzeichnet, daß die Rohre für die weiteren Flüssigkeiten über der Erdoberfläche enden.

18. Vorrichtung nach einem oder mehreren der vorhergehenden Ansprüche, dadurch gekennzeichnet, daß dem Zufuhrteil und den Rohren Flüssigkeiten unter Druck zugeleitet werden.

19. Vorrichtung nach einem oder mehreren der vorhergehenden Ansprüche, dadurch gekennzeichnet, daß das Zufuhrteil (1, 1') und/oder Abgabeteil (2, 2') zumindest annähernd rotationssymmetrisch ausgebildet sind.

20. Vorrichtung inbesondere nach einem oder mehreren der vorhergehenden Ansprüche, mit einem feststehenden Zufuhrteil und einem umlaufenden Rohre aufweisenden Abgabeteil, dadurch gekennzeichnet, daß Zufuhrteil (1) und Abgabeteil (2) mittels mindestens einer Feder, vorzugsweise mittels Schenkelfedern (62, 63) an einem Träger (72) befestigt sind.

21. Vorrichtung nach Anspruch 20, dadurch gekennzeichnet, daß zwei Schenkelfedern (62, 63) nebeneinander angeordnet sind, deren Windungen gegensinnig gewunden sind.

22. Vorrichtung nach Anspruch 19 und/oder 20, dadurch gekennzeichnet, daß kurze Schenkel (66, 67) der Federn (62, 63) mit dem Träger (72), lange Schenkel (73, 74) mit einem Ende mindestens einer Schwinge (78, 79) verbunden sind, an deren anderem Ende der Zufuhrteil (1) und Abgabeteil (2) befestigt sind.
